# DEMANDE DE BREVET EUROPEEN

(11) **EP 3 594 620 A2**
(43) Date de publication de la demande: **15.01.2020**
(21) Numéro de dépôt: 19180942.5
(22) Date de dépôt: 18.06.2019
(51) Int. Cl.: G01C 15/02, G06Q 50/08, G06F 16/29

(54) **PROCEDE DE GEOLOCALISATION ET SYSTEME POUR SA MISE EN OEUVRE**

(30) Priorité: 18.06.2018 FR 1855329
(71) Demandeur: Soletanche Freyssinet, 92500 Rueil-Malmaison (FR)
(72) Inventeur: RABOT, Yohan, 31500 TOULOUSE (FR); HOVHANESSIAN, Gilles, 92160 ANTONY (FR); TROCME, Maxime, 75009 PARIS (FR); STUBLER, Jérôme, PARIS 75016 (FR)
(74) Mandataire: Nony

(57) **Abrégé**

Système comportant :
- un dispositif de scan terrestre (10),
- un repère de topographie (21) fixé de manière permanente sur un support (22), incluant un code (23) lisible de manière automatique à une distance d'au moins 3m par le dispositif de scan (10), ce code (23) renseignant sur la position du repère (21) dans un référentiel donné et/ou comportant un identifiant répertorié dans une base de données (31) dans laquelle est également enregistrée la position du repère dans ledit référentiel.

## Description

La présente invention concerne les procédés et systèmes de géolocalisation utilisés en milieu urbain notamment, et les procédés pour générer des modèles 3D à partir de relevés réalisés dans l'environnement d'un dispositif de scan terrestre.

### Etat de l'art

Il est connu d'utiliser des systèmes de positionnement par satellites pour se géolocaliser. Cependant, sauf à utiliser des récepteurs coûteux la précision n'est généralement pas suffisante pour de nombreuses applications telles que la génération de modèles 3D de l'environnement.

Par ailleurs, la réception du signal GPS peut s'avérer difficile dans certains milieux urbains ou forestiers denses.

Il est connu de se localiser dans un chantier à partir d'un relevé de points caractéristiques sur celui-ci. L'emplacement de ces points est préalablement repéré par un topographe. Pour géolocaliser les points caractéristiques, le topographe peut utiliser un théodolite, un tachéomètre ou une station totale et s'aider de cibles placées en des points précis. Cette opération exige l'intervention d'un opérateur qualifié, et présente un caractère temporaire, puisque les cibles disparaissent à la fin du chantier.

Il existe de nombreuses autres situations où l'intervention d'un topographe est nécessaire, pour réaliser des modèles numériques de terrains ou de bâtiments tels que construits, ou pour localiser le périmètre d'une intervention sur le sous-sol par exemple.

Les fabricants d'appareils de mesure par topographie laser ont développé des stations totales robotisées qui dispensent le topographe des opérations de visée des cibles et qui enregistrent les relevés topographiques automatiquement. Toutefois, l'intervention du topographe reste nécessaire à chaque fois pour le positionnement des cibles lors de la mesure.

Il est connu par ailleurs d'utiliser des points marqués sur le sol ou « *Ground Control Points* » en anglais, visibles et géoréférencés pour recaler les acquisitions aériennes effectuées par avion, hélicoptère ou drone. Ces acquisitions aériennes peuvent être utilisées pour reconstruire une cartographie 3D d'un milieu urbain, comme décrit dans le brevet US 8818076.

La demande WO2017/117667A1 décrit un procédé de surveillance de galeries souterraines visant à corriger une dérive de la position estimée d'un scanner mobile situé dans la galerie au cours du temps et/ou de son déplacement. Des acquisitions du profil de la galerie sont prises à des points de contrôle par un scanner laser en présence d'une puce RFID fournissant un identifiant unique à l'acquisition, et les données correspondantes sont enregistrées dans une base de données. Ces acquisitions de référence peuvent ensuite être comparées aux acquisitions ultérieures réalisées par le scanner mobile pour corriger le problème de dérive précité.

La demande US2015/0170368 divulgue un procédé de géolocalisation fondé sur l'acquisition d'images par un téléphone portable par exemple, et la recherche d'une corrélation entre des points remarquables des images acquises par le téléphone et un catalogue d'images de référence dans lesquelles ces mêmes points ont été géoréférencés. Le procédé peut comporter la sélection sur l'image des points que l'on cherche à géolocaliser. Un tel procédé dépend fortement de la qualité d'acquisition des images et de la capacité du système informatique à détecter des images de référence correspondantes.

Il existe un besoin pour rendre plus aisée la réalisation de modèles numériques d'un environnement, notamment extérieur urbain, ou pour se géolocaliser sans difficulté avant la réalisation de travaux, de façon à permettre de confier ces missions à des opérateurs moins qualifiés qu'un topographe ou faciliter le travail de ce dernier.

### Exposé de l'invention

L'invention vise à répondre à ce besoin et elle y parvient selon un premier de ses aspects, en proposant un système comportant :
- un dispositif de scan terrestre,
- un repère de topographie fixé de manière permanente sur un support, incluant un code lisible de manière automatique à une distance d'au moins 3m par le dispositif de scan, ce code renseignant sur la position du repère dans un référentiel donné et/ou comportant un identifiant répertorié dans une base de données dans laquelle est également enregistrée la position du repère dans ledit référentiel.

Ledit référentiel peut être un référentiel absolu. Par « référentiel absolu » on désigne un référentiel géodésique dans lequel on peut définir la localisation d'un objet sur terre de manière univoque. Son centre est par exemple proche du barycentre de la terre, ses deux premiers axes sont dans le plan de l'équateur et son troisième axe est proche de l'axe de rotation de la terre. Le référentiel absolu pouvant être utilisé dans le cadre de la présente invention est de préférence choisi parmi les suivants : Réseau Géodésique Français 1993 (RGF93), World Geodetic System (WGS84), International Terrestrial Rotational Service (ITRS) ou European Terrestrial Reference System (ETRS).

Le code peut comporter une information sur la précision de positionnement du repère dans ledit référentiel ou cette information peut être accessible via ladite base de données.

Les repères peuvent être géolocalisés dans ledit référentiel avec une précision meilleure que 40cm, mieux 10cm, encore mieux 1cm.

Les repères peuvent être disséminés sur une étendue supérieure à 1 km², et/ou avec une densité supérieure à 100 par km², et/ou avec une distance entre deux repères proches l'un de l'autre comprise entre 5 et 100m.

Le code de chaque repère peut être un code à barres ou un code matriciel, en particulier un QR code.

Le code peut être protégé par une vitre ou gravé ou imprimé de manière à résister aux intempéries et au rayonnement solaire.

Les repères peuvent être présents en façade de bâtiments, notamment sur une plaque donnant le numéro du bâtiment ou le nom d'une rue.

Chaque repère peut comporter un prisme catadioptrique.

### Dispositif de scan terrestre

Par « dispositif de scan terrestre» on désigne tout système permettant la mise en oeuvre du procédé selon l'invention et notamment d'acquérir des informations géométriques sur un environnement donné. Le dispositif de scan terrestre peut reposer sur le sol au moment de l'acquisition, par exemple être monté sur un véhicule se déplaçant dans la rue, par exemple sur la route, ou porté manuellement par un opérateur. Le dispositif de scan terrestre peut imager les façades de bâtiments et autres infrastructures ou équipements avec un axe de visée non vertical du haut vers le bas, son axe de visée lors du scan étant par exemple oblique du bas vers le haut ou horizontal. Le dispositif de scan peut comporter une mémoire pour stocker des données transmises par le repère topographique. Le dispositif de scan terrestre peut bénéficier de moyens de communication lui permettant d'interroger une base de données à partir des informations lues sur le repère topographique.

Le dispositif de scan terrestre peut ainsi comporter :
- Au moins un capteur optique permettant une acquisition optique de l'environnement du dispositif de scan terrestre,
- un système de traitement d'image, par exemple un processeur spécialisé ou un micro-ordinateur, agencé pour traiter une image reçue par le capteur afin de décoder les données du repère géolocalisé,
- un système de localisation, par exemple un processeur spécialisé ou un micro-ordinateur, pour calculer à partir des données lues et de l'orientation du dispositif de scan terrestre par rapport à un point d'intérêt, la position de ce point d'intérêt dans ledit référentiel.

Les systèmes de traitement d'image et de localisation peuvent être par exemple le même processeur spécialisé ou le même micro-ordinateur. Une partie au moins du traitement et des calculs peut être déportée sur un serveur distant, par exemple intégré à une plateforme numérique avec laquelle le dispositif de scan est connecté.

Le dispositif de scan terrestre peut comporter tout élément connu dans les appareils de lasergrammétrie ou photogrammétrie. Le dispositif de scan peut comporter au moins un capteur photo ou vidéo pour acquérir des informations sous forme d'images 2D ou 3D ou un ou plusieurs scanners laser statiques ou dynamiques permettant d'acquérir les informations sous la forme de nuages de points. Le scanner laser peut avantageusement être associé à un capteur photo ou vidéo.

Le dispositif de scan peut comporter un télémètre laser et/ou un dispositif de visée laser permettant de pointer le dispositif de scan sur le repère géolocalisé ou vers un point d'intérêt dont on souhaite connaître la position dans ledit référentiel. Le dispositif de scan terrestre peut ainsi comporter au moins un laser. Le laser peut aider à viser un point d'intérêt. Le dispositif de scan peut comporter un lidar.

Le dispositif de scan peut comporter une caméra pour lire les données présentent sur le repère topographie et/ou à acquérir une image de son environnement immédiat.

Le dispositif de scan peut comporter un moyen de balayage automatique de son environnement, par entraînement mécanique d'une optique notamment.

Le dispositif de scan terrestre peut comporter un système de télécommunications avec une plateforme informatique distante permettant de lui fournir un identifiant du repère topographique géolocalisé par le dispositif de scan et de recevoir en retour la position du repère topographique dans ledit référentiel.

Le dispositif de scan terrestre peut comporter un trépied et une articulation permettant de l'orienter en azimut et élévation.

Le dispositif de scan terrestre peut également comporter un système radiofréquence capable de lire une information propre au repère topographique, le cas échéant, lorsque ce dernier est équipé d'une puce RFID par exemple.

L'invention a encore pour objet, selon un autre de ses aspects, un procédé d'acquisition de données 3D d'un environnement, notamment urbain, à l'aide d'un système selon l'invention, dans lequel :
- une acquisition optique est réalisée à l'aide du dispositif de scan terrestre, cette acquisition optique incluant au moins le repère topographique,
- on lit de façon automatique le code du repère,
- on détermine à partir de ce code la position du repère dans un référentiel donné, et
- l'on utilise cette information pour géo-référencer les données 3D acquises par le dispositif de scan.

L'environnement en question est de préférence une zone extérieure urbaine, comportant par exemple des bâtiments tels que des immeubles d'habitations collectives ou de bureaux, des maisons individuelles, du mobilier urbain tels que des lampadaires, feux de croisement, panneaux de circulation, panneaux publicitaires, abris ou bancs, entre autres.

### Acquisition de l'environnement du dispositif de scan terrestre

Par « acquisition de l'environnement du dispositif de scan terrestre» il faut comprendre un enregistrement de données spatiales, notamment de la géométrie de l'environnement. Cette acquisition peut comprendre une visée laser d'un ou plusieurs repères topographiques géolocalisés, à partir d'une même position du dispositif de scan, en vue de lire des données portées par ce repère et/ou de l'identifier.

L'acquisition des données spatiales peut être effectuée par exemple sous forme de données photogrammétriques, notamment à partir de jeux d'images ou de séquences vidéo, ou sous forme de données lasergrammétriques.

L'acquisition peut être réalisée avec au moins une rotation du dispositif de scan sur lui-même autour d'un axe de rotation, de préférence fixe durant cette rotation, ou à l'aide de plusieurs capteurs ayant des axes de visée différents. L'acquisition peut comporter un balayage en azimut et en élévation de la zone dont on cherche à acquérir la géométrie par le moyen d'acquisition.

L'acquisition peut être réalisée à une distance d'au moins 5m d'au moins l'un desdits repères, mieux d'au moins 10m, voire d'au moins 20m.

L'acquisition peut être réalisée à l'aide d'au moins une caméra, équipée d'un télescope par exemple, ou d'un lidar.

### Repères topographiques

Les repères peuvent être fixés sur un bâtiment, un équipement ou un élément de mobilier urbain préexistant.

Le code peut comporter un identifiant unique du repère, notamment sous la forme d'un code à barres ou matriciel.

Chaque repère peut comporter un prisme catadioptrique, comme mentionné plus haut.

Le procédé d'acquisition de données 3D peut en outre comporter l'étape consistant à interroger une base de données, notamment distante, en fournissant l'identifiant du repère lu par le dispositif de scan, pour obtenir en retour la position de celui-ci dans le référentiel donné, et de préférence obtenir également une indication sur la précision de positionnement du repère dans ce référentiel.

Le code lisible par le dispositif de scan peut comporter la position du repère dans le référentiel donné, et de préférence une indication sur la précision de positionnement du repère dans ce référentiel.

Le procédé d'acquisition de données 3D peut comporter la génération d'un modèle 3D de l'environnement du dispositif de scan à partir au moins de la connaissance de la position du dispositif de scan et d'une acquisition de la géométrie de l'environnement du dispositif de scan.

L'acquisition par le dispositif de scan peut être réalisée à une distance d'au moins 5m d'au moins l'un desdits repères dont le code est lu lors de ladite acquisition, mieux d'au moins 10m, voire d'au moins 20m.

Le procédé d'acquisition de données 3D peut comporter la lecture par le dispositif de scan des codes de repères qui sont disséminés sur une étendue supérieure à 1 km².

Le procédé d'acquisition de données 3D peut comporter la lecture par le dispositif de scan des codes de repères disséminés avec une densité supérieure à 100 par km².

Le procédé d'acquisition de données 3D peut comporter la lecture par le dispositif de scan des codes de repères séparés d'une distance comprise entre 5 et 100m.

Le procédé d'acquisition de données 3D peut comporter la lecture par le dispositif de scan des codes de repères positionnés avec une précision de localisation meilleure que 0,4 m dans ledit référentiel, mieux meilleure que 0,2 m, encore mieux meilleure que 0,1 m, notamment comprise entre 1 et 10 cm.

L'invention a encore pour objet, selon un autre de ses aspects, un procédé de pose d'au moins un repère topographique constitué par un élément rapporté ayant un identifiant qui lui est propre, pour la mise en oeuvre du procédé d'acquisition de données 3D selon l'invention, comportant :
- La pose du repère,
- la géolocalisation du repère ainsi posé dans un référentiel donné,
- l'enregistrement dans une base de données de l'identifiant du repère et de la position du repère dans ledit référentiel.

On peut également enregistrer dans la base une information relative à la précision de positionnement du repère dans ledit référentiel, de manière à permettre d'accéder ultérieurement à cette information en fournissant comme entrée l'identifiant du repère.

En variante, le procédé de pose d'au moins un repère topographique constitué par un élément rapporté sur un support, ayant un code optique qui lui est propre, pour la mise en oeuvre du procédé tel que défini précédemment, ce procédé comportant :
- la géolocalisation de l'emplacement sur le support destiné à recevoir le repère dans un référentiel donné,
- la génération d'un code optique contenant l'information de géolocalisation, de manière à que le dispositif de scan puisse lire le code et récupérer cette information automatiquement,
- la fixation audit emplacement de manière permanente du repère topographique muni du code ainsi généré.

En variante, on inclut dans le code une information sur la précision avec laquelle la position de l'emplacement destiné à recevoir le repère est connue dans ledit référentiel.

L'invention a encore pour objet, selon un autre de ses aspects, un procédé de géolocalisation du dispositif de scan terrestre d'un système selon l'invention, dans lequel :
- une acquisition optique est réalisée à l'aide du dispositif de scan terrestre, cette acquisition optique incluant au moins le repère topographique,
- on lit de façon automatique le code du repère,
- on détermine à partir de ce code la position du repère dans un référentiel donné et
- l'on utilise au moins cette information pour localiser le dispositif de scan.

Comme mentionné plus haut, les repères topographiques sont de préférence géolocalisées dans ledit référentiel avec une précision meilleure que 40cm, mieux 10cm, encore mieux 1cm, les repères étant de préférence disséminés sur une étendue supérieure à 1 km², et/ou avec une densité supérieure à 100 par km², et/ou avec une distance entre deux repères proches l'un de l'autre comprise entre 5 et 100m.

Chaque repère peut comporter un code lisible optiquement, notamment un code à barres ou un code matriciel, en particulier un QR code. Ce code peut être protégé par une vitre ou être gravé ou imprimé de manière à résister aux intempéries et au rayonnement solaire.

Chaque repère peut comporter un circuit électronique radiofréquence adapté à communiquer avec le dispositif de scan terrestre. Cela peut permettre par exemple d'accélérer la recherche optique automatique du repère topographique par le dispositif de scan terrestre, ou fournir un identifiant unique du repère topographique s'il ne comporte pas de code optique.

Au moins une partie des repères peut être présente en façade de bâtiments, notamment sur une plaque donnant le numéro du bâtiment ou le nom d'une rue. L'indication figurant sur la plaque, telles que le numéro ou le nom de la rue, peut éventuellement faire partie de l'environnement immédiat du repère permettant son identification. Dans un exemple, la plaque portant le numéro de bâtiment ou la plaque de nom de rue constituent des repères géolocalisés au sens de l'invention.

Chaque repère peut comporter un prisme catadioptrique, comme mentionné plus haut.

### Brève description des figures

L'invention pourra être mieux comprise à la lecture de la description détaillée qui va suivre, d'exemples non limitatifs de mise en oeuvre de celle-ci, et à l'examen du dessin annexé, sur lequel :
La figure 1 représente de façon schématique un exemple de système pour la mise en oeuvre de l'invention,
la figure 2 est un schéma en blocs illustrant différentes étapes d'un exemple de procédé selon l'invention, et
la figure 3 illustre l'utilisation d'un système selon l'invention,
la figure 4 représente un exemple du repère topographique géolocalisé selon l'invention.

### Description détaillée

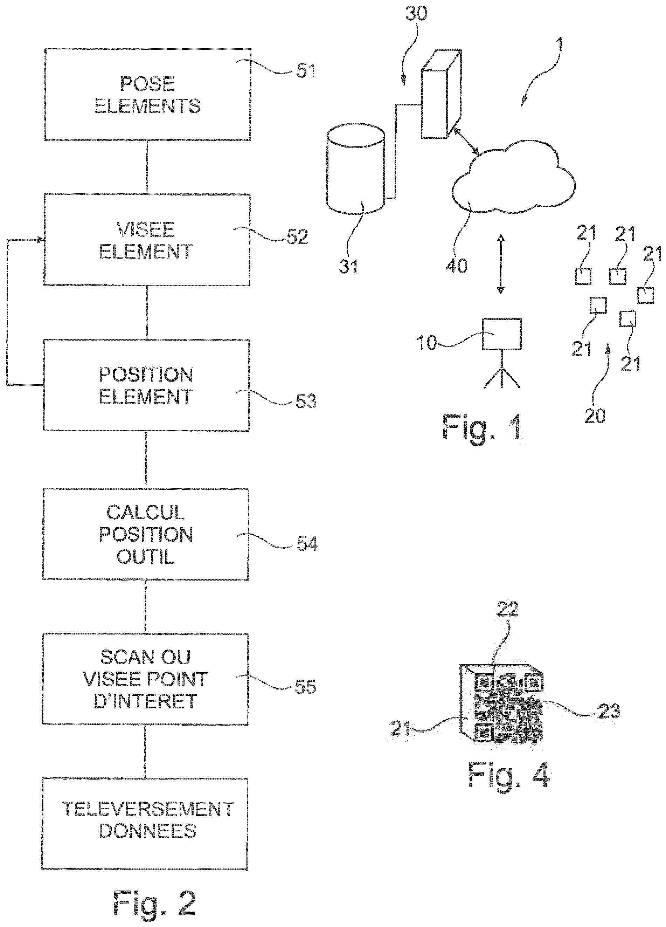

On a représenté à la figure 1 un exemple de système 1 selon l'invention.

Ce système comporte au moins un dispositif de scan terrestre 10 et un ensemble 20 de repères topographiques géolocalisés 21 par le dispositif de scan terrestre 10.

Le système 1 peut également comporter, comme illustré, une plateforme informatique 30 avec laquelle le dispositif de scan 10 peut échanger des données, par exemple par l'intermédiaire d'un réseau de télécommunications 40 tel que le réseau GPRS ou le réseau 3G ou 4G.

Les repères topographiques 21 peuvent, comme illustré à la figure 4, comporter un support 22 sur lequel sont portées des données, par exemple sous la forme d'un code matriciel 23, par exemple de type QR code.

Ce code 23 peut comporter les coordonnées du repère topographique 21 dans un référentiel donné, ou de préférence un identifiant unique du repère topographique, qui est répertorié dans une base de données 31 accessible via la plateforme informatique 30.

Le support 22 est par exemple en métal ou en matière plastique et il est par exemple prévu pour sa fixation à une façade d'un bâtiment.

Le repère topographique 21 peut être réalisé de diverses façons et l'invention n'est pas limitée à un type de support particulier, ni à une manière de porter l'information sur le support 22.

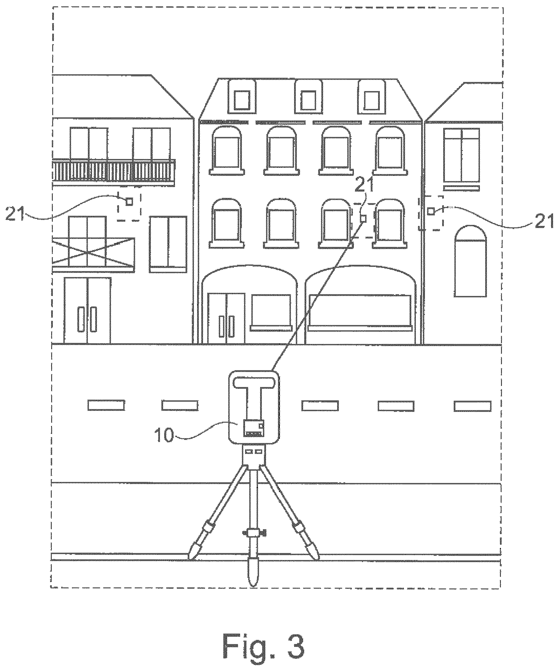

On va maintenant décrire un exemple de mise en oeuvre de l'invention en se référant aux figures 2 et 3.

On commence par poser dans l'environnement urbain les repères topographiques 21, ce qui correspond à l'étape 51 sur la figure 2, en déterminant avec précision leur position, et en utilisant pour cela les techniques classiques de géolocalisation à la disposition des topographes, par 1 exemple une station totale.

Lorsque les repères 21 portent un identifiant unique, par exemple un code matriciel comme illustré à la figure 4, on enregistre dans la base 31 l'identifiant du repère ainsi que la position dans ledit référentiel de celui-ci. On peut également enregistrer dans la base 31 la précision avec laquelle la position du repère est connue dans ledit référentiel.

La densité d'implantation des repères topographiques géolocalisés 21 est de préférence suffisamment grande pour permettre d'en visualiser au moins deux en divers emplacements du milieu urbain où le dispositif de scan terrestre est susceptible d'être disposé pour effectuer des repérages avant travaux ou un scan de l'existant.

Par exemple, si une tranchée est susceptible d'être creusée dans la chaussée pour accéder à des réseaux enterrés, il est souhaitable de pouvoir repérer l'emplacement de cette tranchée en utilisant le système selon l'invention.

L'étendue équipée des repères topographiques géolocalisés peut couvrir tout un quartier, et mieux toute une ville.

Une fois les repères topographiques géolocalisés posés, ceux-ci peuvent rester en place pendant une très longue durée, n'étant pas destinés à être enlevés, mais seulement remplacés le cas échéant.

A tout moment, il est possible de géolocaliser le dispositif de scan terrestre 10 en venant le positionner de telle sorte qu'il puisse viser, ou à tout le moins voir, au moins l'un des repères topographiques 21, comme illustré à la figure 3, et mieux au moins deux desdits repères topographiques 21, ce qui permet des calculs de triangulation.

Une fois le dispositif de scan terrestre 10 en place, on peut viser un premier repère topographique 21, comme illustré à la figure 3, ce qui correspond à l'étape 52 sur la figure 2.

La visée peut être automatique, c'est-à-dire que le dispositif de scan terrestre 10 procède à un balayage de son environnement et détecte ce faisant la présence d'un ou plusieurs repères topographiques 21.

Lorsque le dispositif de scan terrestre 10 détecte un repère topographique 21, il peut connaître la position de celui-ci dans ledit référentiel, ce qui correspond à l'étape 53 sur la figure 2.

En effet, le dispositif de scan terrestre 10 est en mesure de reconnaître le repère topographique 21 grâce au code 23 que le dispositif de scan 10 peut lire sur le repère topographique 21. Ce code peut comporter la position du repère topographique 21, qui est encodée d'une façon prédéfinie permettant sa lecture par le dispositif de scan terrestre 10, ou un identifiant unique du repère topographique 21, auquel cas le dispositif de scan terrestre peut interroger la base 31 pour connaître en retour la position du repère topographique 21 dans ledit référentiel.

Les étapes 52 et 53 peuvent être répétées pour chacun des repères topographiques 21 détectables par le dispositif de scan terrestre 10.

Ensuite, la position du dispositif de scan terrestre peut être déterminée par calcul à l'étape 54, connaissant la position des repères tomographiques 21 et la façon dont ils sont vus depuis le dispositif de scan terrestre 10.

Une fois la position du dispositif de scan terrestre connue, ce dernier peut être utilisé pour tout type de relevé ou de scan, à l'étape 55. Par exemple, on peut viser n'importe quel point d'intérêt depuis le dispositif de scan terrestre et connaître sa position dans ledit référentiel, et connaissant l'incertitude sur le positionnement des repères topographiques 21, connaître également la précision de la mesure.

On peut également scanner un ouvrage tel que construit ou mettre à jour un modèle 3D d'un ouvrage ou d'une ville.

De tels relevés ou scans sont possibles sans l'aide des réseaux satellites, ce qui permet une utilisation en milieu urbain dense.

Le cas échéant, les données résultant des relevés ou scans effectués peuvent être téléversées dans la plateforme 30.

L'invention n'est pas limitée aux exemples qui viennent d'être décrits.

Par exemple, le dispositif de scan terrestre 10 peut être réalisé autrement et l'acquisition s'effectue par exemple à partir d'un véhicule terrestre ou d'un drone se déplaçant le long d'une rue.

En fonction de la précision de géolocalisation recherchée pour le dispositif de scan terrestre, l'acquisition optique des repères topographiques 21 peut s'effectuer avec ou sans visée laser, et dans un exemple cette acquisition est réalisée à l'aide d'une ou plusieurs caméras seulement.

Bien que l'invention permette de s'affranchir d'un positionnement par satellite de dispositif de scan, il demeure possible de s'aider d'un positionnement par satellite du dispositif de scan pour aider à identifier les repères 21 vus par celui-ci. Cela est notamment intéressant lorsque les repères 21 sont identifiés grâce à leur environnement immédiat. Dans ce cas, on peut rechercher dans le catalogue d'images de référence celles dont la position est proche de la position donnée par la localisation satellite, ce qui peut accélérer l'identification du repère 21.

## Revendications

1. Système comportant :
- un dispositif de scan terrestre (10),
- un repère de topographie (21) fixé de manière permanente sur un support (22), incluant un code (23) lisible de manière automatique à une distance d'au moins 3m par le dispositif de scan (10), ce code (23) renseignant sur la position du repère (21) dans un référentiel donné et/ou comportant un identifiant répertorié dans une base de données (31) dans laquelle est également enregistrée la position du repère dans ledit référentiel.

2. Système selon la revendication 1, le code (23) comportant une information sur la précision de positionnement du repère (21) dans ledit référentiel ou cette information étant accessible via ladite base de données (31).

3. Système selon l'une des revendications 1 et 2, le ou les repères (21) étant géolocalisés dans ledit référentiel avec une précision meilleure que 40cm, mieux 10cm, encore mieux meilleure que 1cm.

4. Système selon l'une quelconque des revendications 1 à 3, comportant des repères (21) disséminés sur une étendue supérieure à 1 km², et/ou avec une densité supérieure à 100 par km², et/ou avec une distance entre deux repères (21) proches l'un de l'autre comprise entre 5 et 100m.

5. Système selon l'une quelconque des revendications 1 à 4, le code (23) de chaque repère (21) étant un code à barres ou un code matriciel, en particulier un QR code, le code (23) étant par exemple protégé par une vitre ou gravé ou imprimé de manière à résister aux intempéries et au rayonnement solaire.

6. Système selon l'une quelconque des revendications 1 à 5, comportant des repères (21) présents en façade de bâtiments, notamment sur une plaque donnant le numéro du bâtiment ou le nom d'une rue, le ou chaque repère (21) comportant par exemple un prisme catadioptrique.

7. Système selon l'une quelconque des revendications précédentes, le dispositif de scan (10) comportant un télémètre laser et/ou un dispositif de visée laser, et/ou un lidar, et/ou une caméra, et/ou un moyen de balayage automatique de son environnement, par entraînement mécanique d'une optique notamment.

8. Procédé d'acquisition de données 3D d'un environnement, notamment urbain, à l'aide d'un système selon l'une quelconque des revendications précédentes, dans lequel :
- une acquisition optique est réalisée à l'aide du dispositif de scan terrestre (10), cette acquisition optique incluant au moins le repère topographique (21),
- on lit de façon automatique le code (23) du repère (21),
- on détermine à partir de ce code (23) la position du repère (21) dans un référentiel donné et
- l'on utilise cette information pour géo-référencer les données 3D acquises par le dispositif de scan (10).

9. Procédé selon la revendication 8, au moins l'un des repères (21) étant fixé sur un bâtiment, un équipement ou un élément de mobilier urbain préexistant.

10. Procédé selon l'une des revendications 8 et 9, le code (23) comportant un identifiant unique du repère, notamment sous la forme d'un code à barres ou matriciel, le procédé comportant de préférence l'étape consistant à interroger une base de données (31), notamment distante, en fournissant l'identifiant du repère lu par le dispositif de scan (10), pour obtenir en retour la position de celui-ci dans le référentiel donné, et de préférence une indication sur la précision de positionnement du repère (21) dans ce référentiel.

11. Procédé selon l'une quelconque des revendications 8 à 10, le code (23) lisible par le dispositif de scan (10) comportant la position du repère (21) dans le référentiel donné, et de préférence une indication sur la précision de positionnement du repère (21) dans ce référentiel.

12. Procédé selon l'une quelconque des revendications 8 à 11, l'acquisition étant réalisée avec au moins une rotation du dispositif de scan (10) sur lui-même autour d'un axe de rotation, de préférence fixe durant cette rotation, ou à l'aide de plusieurs capteurs ayant des axes de visée différents, l'acquisition étant de préférence réalisée à l'aide d'au moins une caméra ou d'un lidar, l'acquisition par le dispositif de scan (10) étant de préférence réalisée à une distance d'au moins 5m d'au moins l'un desdits repères (21) dont le code (23) est lu lors de ladite acquisition, mieux d'au moins 10m, voire d'au moins 20m

13. Procédé selon l'une quelconque des revendications 8 à 12, comportant la génération d'un modèle 3D de l'environnement du dispositif de scan (10) à partir au moins de la connaissance de la position du dispositif de scan (10) et d'une acquisition de la géométrie de l'environnement du dispositif de scan (10).

14. Procédé selon l'une quelconque des revendications 8 à 13, comportant la lecture par le dispositif de scan (10) des codes de repères qui sont disséminés sur une étendue supérieure à 1 km² et/ou des codes (23) de repères (21) disséminés avec une densité supérieure à 100 par km², et/ou des codes (23) de repères (21) séparés d'une distance comprise entre 5 et 100m, et/ou des codes (23) de repères (21) positionnés avec une précision de localisation meilleure que 0,4 m dans ledit référentiel, mieux meilleure que 0,2 m, encore mieux meilleure que 0,1 m, notamment comprise entre 1 et 10 cm.

15. Procédé de pose d'au moins un repère topographique (21) constitué par un élément rapporté ayant un identifiant qui lui est propre, pour la mise en oeuvre du procédé tel que défini dans l'une quelconque des revendications 8 à 14, comportant :
- La pose du repère (21),
- la géolocalisation du repère ainsi posé dans un référentiel donné,
- l'enregistrement éventuel dans une base de données (31) de l'identifiant du repère (21) et de la position du repère (21) dans ledit référentiel.

16. Procédé selon la revendication 15, dans lequel on enregistre également dans la base (31) une information relative à la précision de positionnement du repère (21) dans ledit référentiel, de manière à permettre d'accéder ultérieurement à cette information en fournissant comme entrée l'identifiant du repère (21).

17. Procédé de pose d'au moins un repère topographique (21) constitué par un élément rapporté sur un support (22), ayant un code optique (23) qui lui est propre, pour la mise en oeuvre du procédé tel que défini dans l'une quelconque des revendications 8 à 14, ce procédé comportant :
- la géolocalisation de l'emplacement sur le support (22) destiné à recevoir le repère (21) dans un référentiel donné,
- la génération d'un code optique (23) contenant l'information de géolocalisation, de manière à que le dispositif de scan (10) puisse lire le code (23) et récupérer cette information automatiquement,
- la fixation audit emplacement de manière permanente du repère topographique (21) muni du code ainsi généré.

18. Procédé selon la revendication 17, dans lequel on inclut dans le code (23) une information sur la précision avec laquelle la position de l'emplacement destiné à recevoir le repère (21) est connue dans ledit référentiel.

19. Procédé de géolocalisation du dispositif de scan terrestre (10) d'un système selon l'une quelconque des revendications 1 à 7, dans lequel :
- une acquisition optique est réalisée à l'aide du dispositif de scan terrestre (10), cette acquisition optique incluant au moins le repère topographique (23),
- on lit de façon automatique le code (23) du repère (21),
- on détermine à partir de ce code (23) la position du repère dans un référentiel donné et
- l'on utilise au moins cette information pour localiser le dispositif de scan (10).
